# DEMANDE DE BREVET EUROPEEN

(11) **EP 1 388 490 A1**
(43) Date de publication de la demande: **11.02.2004**
(21) Numéro de dépôt: 03354071.7
(22) Date de dépôt: 07.08.2003
(51) Int. Cl.: B62K 3/00, B62K 25/28

(54) **Trotinette agencée pour pratiquer des activités de sports et de loisirs sur un sol irrégulier à pente descendante**

(30) Priorité: 07.08.2002 FR 0210028
(71) Demandeur: Couleur Systèmes Laques, ZA Actigone, 74960 Meythet (FR)
(72) Inventeur: Colombo, Serge, 74000 Annecy (FR); Pellarin, Bruno, 74330 Poisy (FR)
(74) Mandataire: Hecké, Gérard

(57) **Abrégé**

Une trottinette comprend un châssis composé d'une partie avant (7), formé d'un bras avant (8) supportant en pivotement un arbre de direction (1) porteur d'une roue avant, d'une partie médiane (11) composée de renforts latéraux (13,14) et d'un élément rigide arrière (17), et une partie arrière (12) composé d'un organe à géométrie variable et d'une fourche (4) porteuse d'une roue arrière. Des moyens élastiques de suspension qui s'étendent entre les renforts latéraux (13,14) composant la partie médiane (11) du châssis, relient entre elles les parties avant (7) et arrière (12) du châssis auxquelles ils sont articulés, en étant portés entre ces parties (12,7) de manière suspendue. L'organe à géométrie variable compense la déformation des moyens élastiques de suspension lors d'un basculement de la partie arrière (12) du châssis, porteuse de la roue arrière.

## Description

### Domaine technique de l'invention.

La présente invention est du domaine des activités de sports et de loisirs, utilisant un véhicule terrestre exempt de mécanisme de propulsion. Elle a plus particulièrement pour objet une trottinette adaptée pour être utilisée par gravité en pente descendante sur un sol irrégulier, tel qu'un chemin ou analogue.

### Etat de la technique.

On connaît parmi les véhicules terrestres, les trottinettes qui permettent à un utilisateur de se déplacer, soit en exploitant la gravité sur un sol en pente descendante, soit en prenant appui sur ce sol pour pousser la trottinette. On relèvera à ce stade de la présentation de la présente invention qu'il a été proposé par l'art antérieur de telles trottinettes équipées de mécanismes de propulsion à pédale.

La pratique de la trottinette est notamment réalisée en milieu urbain, sur un sol régulier tel que revêtu d'asphalte, qui présente peu ou pas d'aspérité voire d'obstacle. L'utilisateur se place en station debout sur un plateau supporté par un châssis roulant, comportant au moins une roue avant supportée par un arbre de direction monté tournant sur le châssis, et au moins une roue arrière. Il existe déjà des trottinettes ou véhicules similaires adaptés à la pratique de la descente en milieu plus ou moins chaotique, mais elles ne sont pas équipées d'un système d'amortisseur arrière.

On connaît par ailleurs les sports de glisse pratiqués en hiver dans les stations de montagne, qui utilisent des sols enneigés à pente descendante. On citera pour exemple le ski de descente, le ski de fond et le surf des neiges, ou une trottinette des neiges pourvue de petits skis. Un problème posé réside dans l'utilisation des infrastructures de tels sports d'hiver en l'absence de neige.

Il a été proposé d'utiliser des véhicules terrestres d'un autre genre que les trottinettes pour exploiter ces infrastructures en période estivale. Ces véhicules terrestres sont organisés en cycles ou en quadri-cycles (kart tout terrain), dont la force motrice est la force musculaire pour propulser le véhicule par l'intermédiaire d'un mécanisme comprenant un pédalier et des moyens de transmission de la force musculaire à la roue arrière. L'organisation générale de ces cycles est adaptée à la pratique sportive sur un sol irrégulier, voire chaotique, et comporte notamment des moyens de suspension de la roue arrière. On comprendra que ces cycles sont structurellement éloignés des trottinettes, en ce que les problèmes à résoudre concernant leur organisation générale pour leur propulsion leur sont spécifiques.

On relèvera au demeurant que l'on connaît des trottinettes équipées de tels moyens de suspension de leur roue arrière. On pourra notamment se reporter au document FR2815320 (TSAI SHUI TE) qui décrit une telle trottinette. Il apparaît cependant que les moyens de suspension décrits dans ce document ne sont pas adaptés à la pratique de la trottinette sur un sol irrégulier, voire chaotique. En outre, l'organisation du châssis des trottinettes n'est pas non plus adaptée à une telle pratique.

### Objet de l'invention

Le but général de la présente invention est de proposer une trottinette dont l'organisation répond aux exigences de la pratique de cette activité sur un sol irrégulier voire chaotique, en pente descendante notamment. Il est apparu que la transposition des agencements propres aux cycles adaptés à la pratique d'une telle activité, n'était pas réalisable en raison des spécificités propres à chacun de ces genres de véhicule.

Plus particulièrement, le but de la présente invention est de proposer une trottinette pourvue de moyens de suspension de son organe roulant arrière, sur un châssis du genre de ceux relevant de ce genre de véhicule.

Plus particulièrement encore, le but de la présente invention est de proposer une trottinette, dont le châssis est structurellement adapté pour la pratique de cette activité sur des sols difficiles.

Selon l'invention, ce but est atteint par les revendications annexées.

Plus particulièrement, la trottinette de la présente invention est du genre de celles principalement constituées d'un châssis roulant équipé d'un dispositif à suspension élastique arrière. Ce châssis comprend une partie avant supportant en pivotement un arbre de direction pourvu en partie haute d'un organe de préhension pour sa manoeuvre par l'utilisateur, et en partie basse d'au moins une roue avant. Ce châssis comprend aussi une partie arrière, porteuse d'au moins une roue arrière, qui est articulée en basculement sur une partie médiane du châssis, à l'encontre de moyens élastiques de suspension. Un plateau est supporté en zone médiane du châssis pour recevoir l'utilisateur en station debout.

Selon la présente invention, une trottinette du genre susvisée est reconnaissable en ce qu'elle comprend les caractéristiques suivantes prises seules ou en combinaison :

Les moyens élastiques de suspension sont notamment articulés en interposition sur la partie avant et sur la partie arrière du châssis. Un organe à géométrie variable, qui participe de la partie arrière du châssis, est articulé sur la partie médiane du châssis d'une part, et sur les moyens élastiques de suspension d'autre part. On relèvera donc que les moyens élastiques de suspension s'étendent notamment de la partie arrière jusqu'à la partie avant du châssis, en étant portés entre ces parties de manière suspendue. L'organe à géométrie variable compense la déformation des moyens élastiques de suspension, lors d'un basculement de la partie arrière du châssis porteuse de la roue arrière.

L'organe à géométrie variable comprend par exemple une pluralité de biellettes articulées les unes aux autres. Une première biellette est articulée à ses extrémités respectivement sur les moyens élastiques de suspension et sur une fourche porteuse de la roue arrière, qui participe de la partie arrière du châssis. Une deuxième biellette est articulée à ses extrémités respectivement sur la première biellette et sur la partie médiane du châssis.

Il est apparu qu'une solution avantageuse pour la réalisation des moyens élastiques de suspension, qui s'étendent sur sensiblement la longueur de la partie médiane du châssis, réside dans l'utilisation de tels moyens du type ressort mécanique à gaz ou analogue.

La partie médiane du châssis est plus particulièrement organisée à partir de tubulures latérales qui s'étendent entre les parties avant et arrière du châssis. Ces tubulures, qui sont organisées en arc boutant, non seulement offrent une robustesse adéquate à l'utilisation particulière de la trottinette sur un sol irrégulier, voire chaotique, mais aussi ménagent entre elles un espace à l'intérieur duquel peuvent s'étendrent les moyens élastiques de suspension, pour permettre leur articulation à chacune des parties avant et arrière du châssis.

Il en ressort que selon une forme préférée de réalisation de la partie médiane du châssis, celle-ci est constituée par des renforts latéraux disposés de part et d'autre de l'axe général médian d'extension du châssis, les moyens élastiques de suspension s'étendant entre les renforts latéraux qui les bordent.

Les renforts latéraux sont plus particulièrement agencés en arc-boutant prenant appui à leurs extrémités respectives sur la partie avant du châssis d'une part, et sur un élément rigide arrière de la partie médiane du châssis d'autre part. L'organe à géométrie variable et la fourche porteuse de la roue arrière sont articulés sur cet élément rigide.

De préférence, la partie médiane du châssis comporte une combinaison de renforts latéraux, comprenant pour chacun d'eux un renfort latéral principal et un renfort latéral secondaire. Le renfort latéral principal est notamment en appui sur la partie avant et sur l'élément rigide, tandis que le renfort latéral secondaire prend appui sur le renfort latéral principal correspondant par l'intermédiaire d'au moins une jambe de soutien.

Par ailleurs, le plateau est préférentiellement supporté en ses zones correspondantes par chacune des parties avant, médiane et arrière du châssis. Plus particulièrement, l'élément rigide constitue en outre un socle arrière pour le soutien de la zone arrière du plateau. Les renforts latéraux secondaires sont reliés l'un à l'autre par une barre transversale pour un soutien de la zone médiane du plateau. Enfin, la partie avant du châssis constitue en outre un socle avant pour le soutien de la zone avant du plateau.

On relèvera que l'élément rigide prend de préférence appui sur les renforts latéraux secondaires par l'intermédiaire d'au moins une jambe de soutien orientée en prolongement des jambes d'appui des renforts latéraux secondaires sur les renforts latéraux principaux.

Par ailleurs encore, la partie avant du châssis est agencée en un bras avant étendu en élévation. Ce bras avant est pourvu à sa partie haute d'un fût de réception de l'arbre de direction, qui supporte à sa base une roue de grand diamètre. On notera à ce propos que la roue arrière est elle aussi préférentiellement une roue de grand diamètre.

Le bras avant comporte de préférence des renforts latéraux supérieurs reliant sa zone médiane du châssis au fût, tandis que les renforts latéraux principaux prennent de préférence appui sur la partie avant du châssis, en une zone sensiblement médiane du bras avant.

### Description de l'invention en relation avec les figures annexées.

La présente invention sera mieux comprise et des détails en relevant apparaîtront, à la description qui va en être faite d'une forme préférée de réalisation en relation avec les figures des planches annexées, dans lesquelles :
La fig.1 est une représentation de côté d'une trottinette selon une forme préférée de réalisation de la présente invention.
Les fig.2 et fig.3 sont des représentations d'un châssis supportant un plateau, qui participent de la trottinette illustrée sur la fig.1, respectivement en vue de côté et en élévation arrière.
La fig.4 et la fig.5 sont des représentations d'un châssis illustré sur les fig.2 et fig.3, respectivement en perspective et en vue de dessus.
Les fig.6-8 sont des vues partielles de côté d'une trottinette représentée sur la fig.1, illustrant successivement les trois phases de fonctionnement des moyens de suspension arrière de la trottinette, respectivement au repos, dans une position de tassement moyen, et dans une position de tassement maximum.

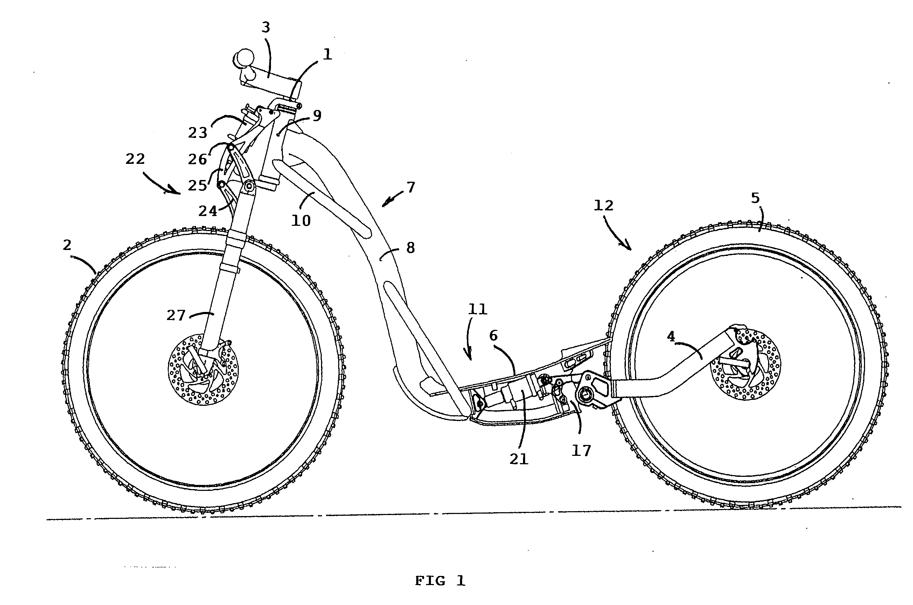

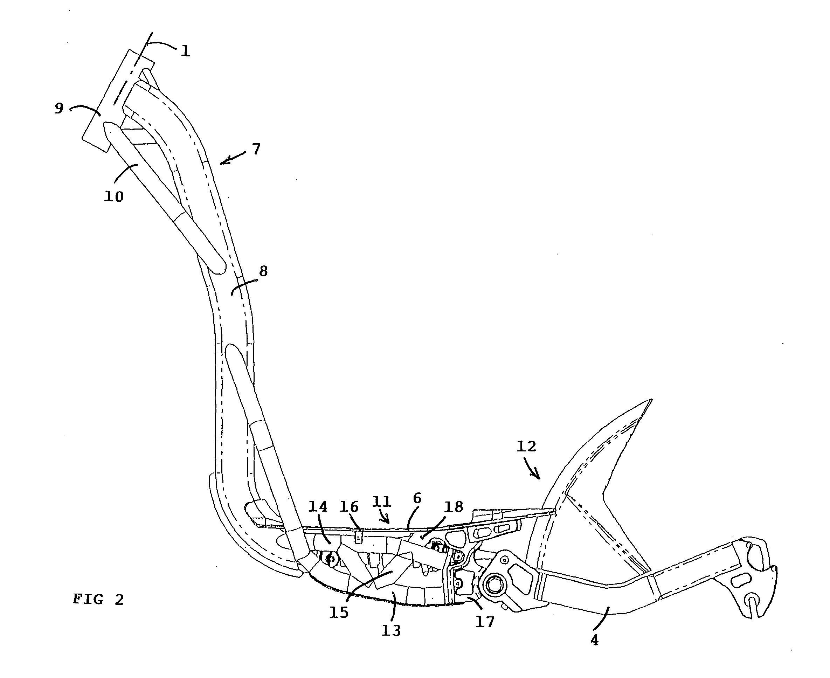

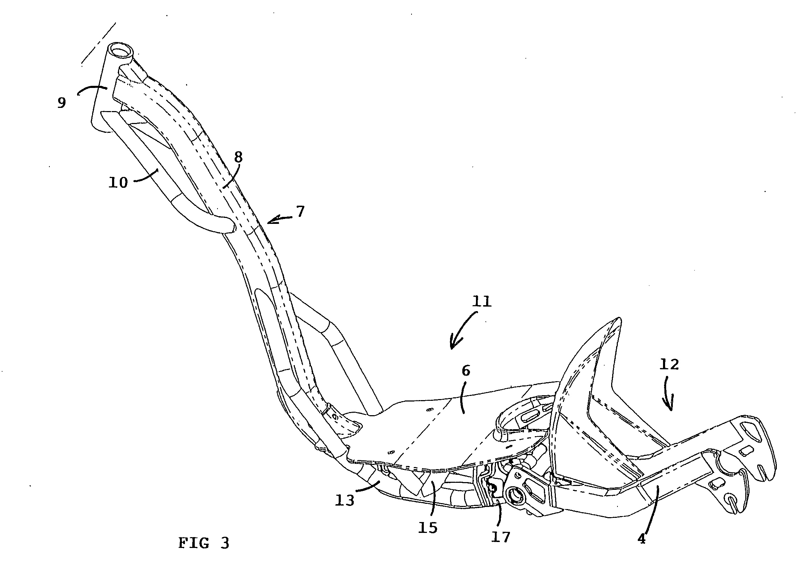

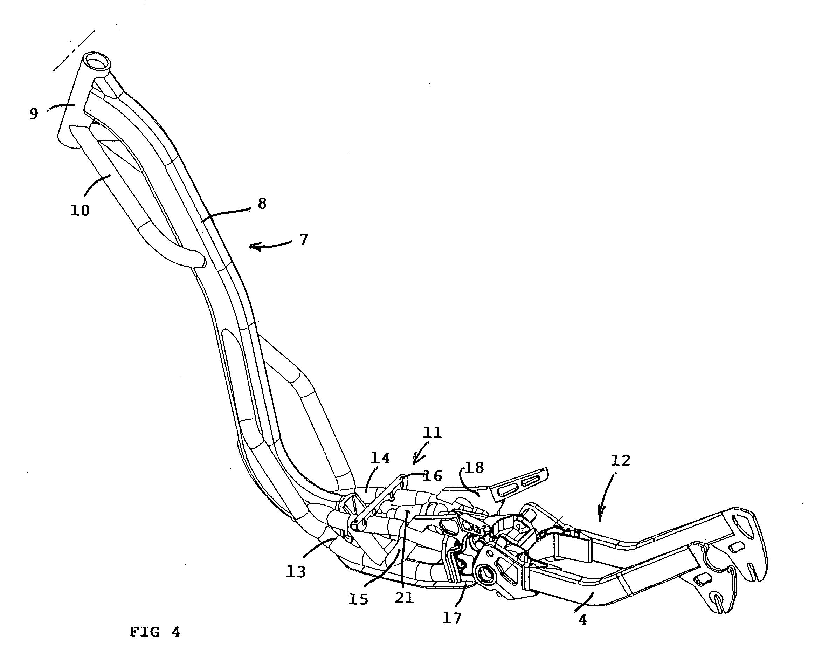

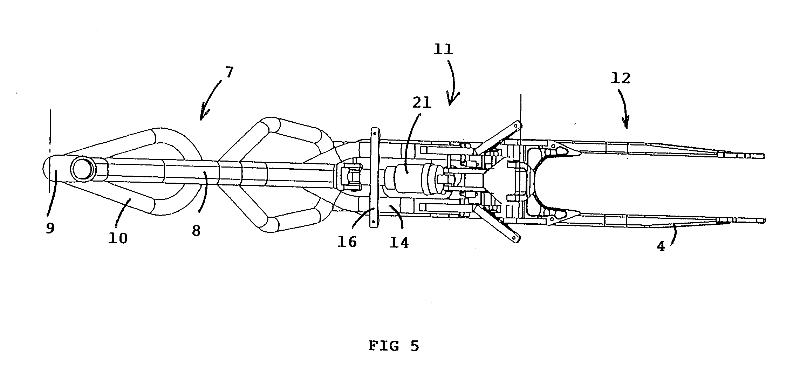

Sur la fig.1, une trottinette comprend principalement un châssis supportant à l'avant en pivotement un arbre de direction 1 équipé d'une roue avant 2 et d'un organe de préhension 3 par l'utilisateur, et à l'arrière une fourche 4 porteuse d'une roue arrière 5. Cette fourche 4 est équipée d'un dispositif à suspension élastique. Par ailleurs, le châssis supporte un plateau 6 pour permettre à l'utilisateur d'être porté par la trottinette en station debout.
En se reportant par ailleurs aux fig.2 à fig.5, le châssis est notamment composé de trois parties successives :

Une première partie avant 7, qui comprend un bras avant 8 sur lequel est monté en pivotement l'arbre de direction 1, à l'intérieur d'un fût 9. Ce fût 9 est fixé à l'extrémité supérieure du bras avant 8, qui comporte des renforts latéraux supérieurs, tels que 10, qui relient le fût 9 avec la zone médiane du bras avant 8. On remarquera plus particulièrement sur les fig.1 à fig.3 que le plateau 6 est soutenu à sa zone avant par le bras avant 8 du châssis.

Une partie médiane 11, qui est interposée entre la partie avant 7 et une partie arrière 12 du châssis. La partie médiane 11 du châssis est composée de renforts latéraux, dont des renforts latéraux principaux, tels que 13, et des renforts latéraux secondaires, tels que 14, prenant appui sur les renforts latéraux principaux 13 par l'intermédiaire de jambes d'appui, telles que 15. Une barre transversale 16 de soutien du plateau 6 en sa zone médiane, relie les renforts latéraux secondaires 14 entre eux. On relèvera à ce stade de la description que la partie médiane 11 du châssis comporte en outre un élément rigide arrière 17, qui prend appui sur les renforts latéraux secondaires 14 par l'intermédiaire d'une jambe de soutien 18.

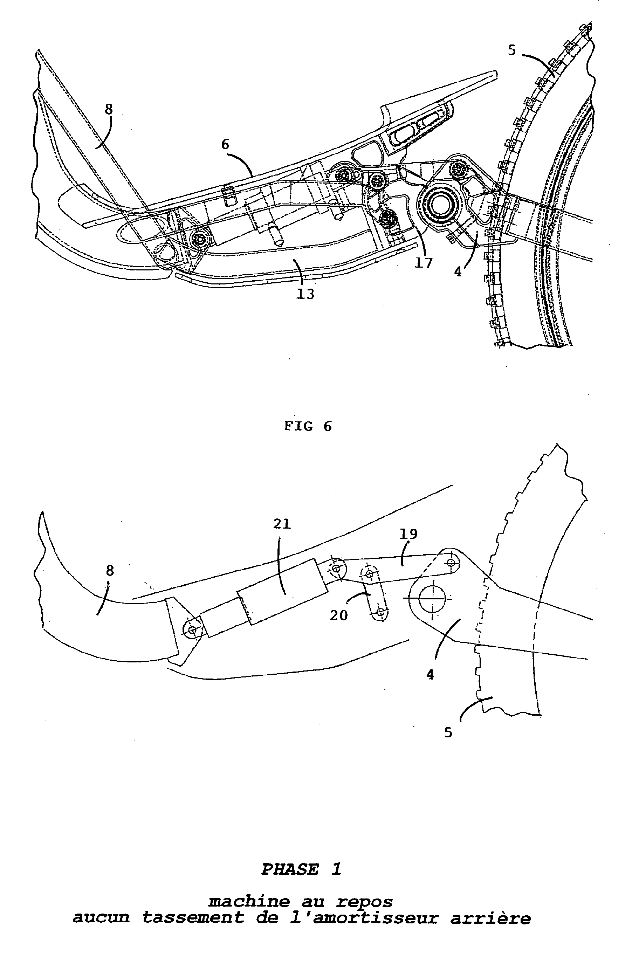

La partie arrière 12, composée de la fourche arrière 4 et d'un organe à géométrie variable, ce dernier participant du dispositif à suspension arrière de la trottinette. En se reportant par ailleurs aux fig.6-8, cet organe à géométrie variable est composé d'un jeu de biellettes 19 et 20 articulées à leurs extrémités respectives. Une première biellette 19 est articulée sur des moyens élastiques 21 de suspension participant du dispositif à suspension et sur la fourche 4. Une deuxième biellette 20, de conformation générale arquée, est articulée sur la première biellette 19 et sur l'élément rigide 17 de la partie médiane 11 du châssis. On remarquera aussi que la fourche 4 est elle aussi articulée en basculement sur l'élément rigide 17.

On remarquera que les moyens élastiques de suspension 21, constitué d'un ressort à gaz, d'un vérin hydraulique ou d'un combiné ressort mécanique et à gaz, s'étendent entre les parties avant 7 et arrière 12 du châssis, en étant logés entre les renforts latéraux 13,14 composant la partie médiane 11 de celui-ci.

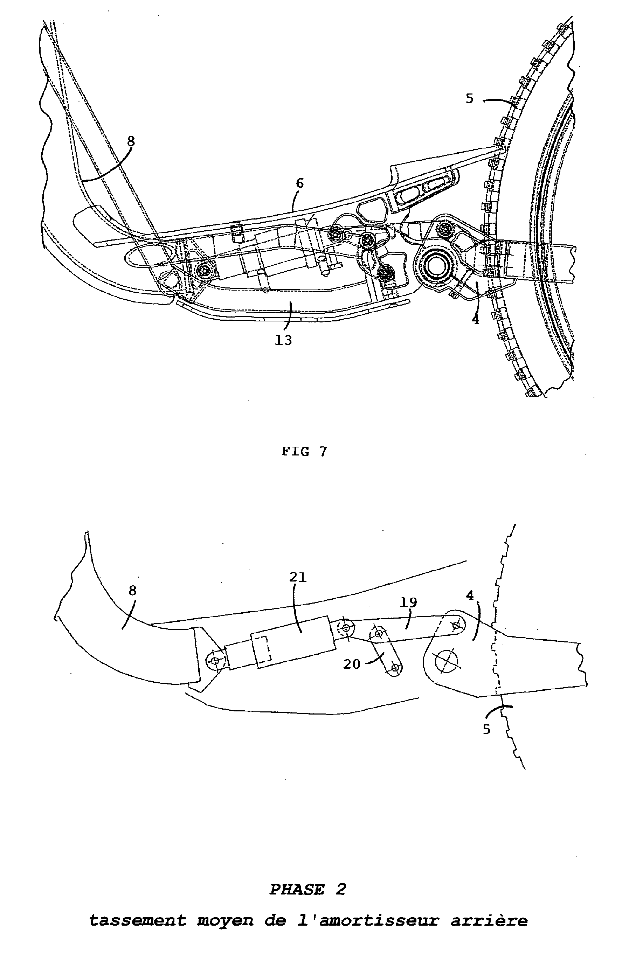

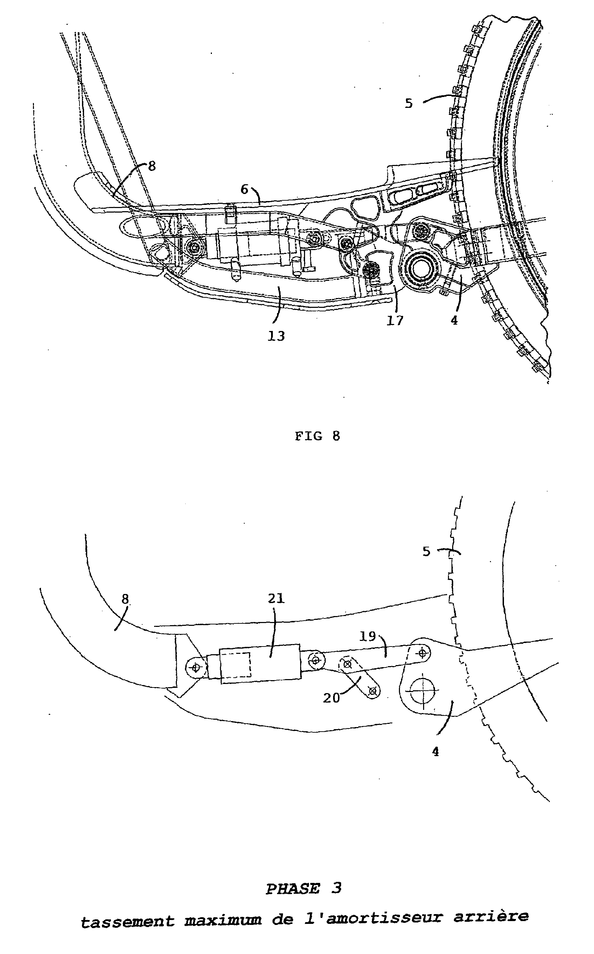

La figure 6 montre la machine au repos, l'amortisseur 21 arrière ne subissant aucun tassement. La figure 7 illustre un tassement moyen de l'amortisseur 21 arrière. La figure 8 représente un tassement maximum de l'amortisseur 21 arrière.

On remarquera enfin sur l'exemple de réalisation illustré que la partie avant 7 du châssis est équipée d'un dispositif amortisseur 22, associant des moyens de suspension élastique 23 à un jeu de biellettes 24,25,26 reliant le fût 9 à une fourche 27 supportant la roue avant 2.

## Revendications

1. Trottinette principalement constituée d'un châssis roulant équipé d'un dispositif à suspension élastique arrière, ce châssis comprenant une partie avant (7) supportant en pivotement un arbre de direction (1) pourvu en partie haute d'un organe de préhension (3) pour sa manoeuvre par l'utilisateur, et en partie basse d'au moins une roue avant (2), et une partie arrière (12), porteuse d'au moins une roue arrière (5), qui est articulée en basculement sur une partie médiane (11) du châssis, à l'encontre de moyens élastiques de suspension (21), un plateau (6) étant supporté en zone médiane du châssis pour recevoir l'utilisateur en station debout,
**caractérisé en ce que** les moyens élastiques de suspension (21) sont articulés en interposition sur la partie avant (7) et sur la partie arrière (12) du châssis, un organe à géométrie variable participant de la partie arrière (12) du châssis étant articulé sur la partie médiane (11) du châssis d'une part, et sur les moyens élastiques de suspension (21) d'autre part, les moyens élastiques de suspension (21) s'étendant de la partie arrière (12) jusqu'à la partie avant (7) du châssis, en étant portés entre ces parties (12,7) de manière suspendue, l'organe à géométrie variable compensant la déformation des moyens élastiques (21) de suspension lors d'un basculement de la partie arrière (12) du châssis, porteuse de la roue arrière (5).

2. Trottinette selon la revendication 1 **caractérisée en ce que** l'organe à géométrie variable comprend une pluralité de biellettes (19,20) articulées les unes aux autres, dont une première biellette (19) articulée à ses extrémités, respectivement sur les moyens élastiques (21) de suspension et sur une fourche (4) porteuse de la roue arrière (5), qui participe de la partie arrière (12) du châssis, et dont une deuxième biellette (20) articulée à ses extrémités, respectivement sur la première biellette (19) et sur la partie médiane (11) du châssis.

3. Trottinette selon l'une quelconque des revendications précédentes **caractérisée en ce que** les moyens élastiques (21) de suspension sont du type ressort à gaz, vérin hydraulique ou combiné ressort mécanique et à gaz.

4. Trottinette selon l'une quelconque des revendications précédentes **caractérisée en ce que** la partie médiane (11) du châssis est principalement constituée par des renforts latéraux (13,14) disposés de part et d'autre de l'axe général médian d'extension du châssis, les moyens élastiques (21) de suspension s'étendant entre les renforts latéraux (13,14) qui les bordent.

5. Trottinette selon la revendication 4 **caractérisée en ce que** les renforts latéraux (13,14) sont agencés en arc-boutant prenant appui à leurs extrémités respectives sur la partie avant (7) du châssis d'une part, et sur un élément rigide arrière (17) de la partie médiane (11) du châssis d'autre part, sur lequel élément rigide (17) sont articulés l'organe à géométrie variable et la fourche (4) porteuse de la roue arrière (5).

6. Trottinette selon la revendication 5 **caractérisée en ce que** la partie médiane (11) du châssis comporte une combinaison de renforts latéraux, comprenant pour chacun d'eux un renfort latéral principal (13), qui est en appui sur la partie avant (7) et sur l'élément rigide (17), et un renfort latéral secondaire (14) prenant appui sur le renfort latéral principal (13) correspondant par l'intermédiaire d'au moins une jambe de soutien (18).

7. Trottinette selon la revendication 6 **caractérisée en ce que** l'élément rigide (17) constitue en outre un socle arrière pour le soutien de la zone arrière du plateau (6), **en ce que** les renforts latéraux secondaires (14) sont reliés l'un à l'autre par une barre transversale (16) de soutien de la zone médiane du plateau (6), et **en ce que** la partie avant (7) du châssis constitue en outre un socle avant de soutien de la zone avant du plateau (6).

8. Trottinette selon l'une quelconque des revendications 6 et 7 **caractérisée en ce que** l'élément rigide (17) prend appui sur les renforts latéraux secondaires (14) par l'intermédiaire d'au moins une jambe de soutien (18) orientée en prolongement des jambes d'appui (15) des renforts latéraux secondaires (14) sur les renforts latéraux principaux (13).

9. Trottinette selon l'une quelconque des revendications 6 à 8 **caractérisée en ce que** la partie avant (7) du châssis est un bras avant (8) étendu en élévation, et pourvu à sa partie haute d'un fût (9) de réception de l'arbre de direction (1), qui supporte à sa base une roue (2) de grand diamètre.

10. Trottinette selon la revendication 9 **caractérisée en ce que** le bras avant (8) comporte des renforts latéraux supérieurs (10) reliant sa zone médiane du châssis (11) au fût (9).

11. Trottinette selon l'une quelconque des revendications 9 et 10 **caractérisée en ce que** les renforts latéraux principaux (13) prennent appui sur la partie avant (7) du châssis en une zone sensiblement médiane du bras avant (8).

12. Trottinette selon les revendications 1 à 11 **caractérisée en ce que** le châssis est principalement composé de trois parties successives :
- la partie avant (7), qui comprend le bras avant (8) sur lequel est monté en pivotement l'arbre de direction (1) à l'intérieur du fût (9), celui-ci (9) étant fixé à l'extrémité supérieure du bras avant (8), qui comporte des renforts latéraux supérieurs (10) qui relient le fût (9) avec la zone médiane du bras avant (8),
- la partie médiane (11), qui est interposée entre la partie avant (7) et la partie arrière (12) du châssis, cette partie médiane (11) étant composée des renforts latéraux principaux (13) et secondaires (14), la partie médiane (11) du châssis comportant en outre l'élément rigide arrière (17),
- et la partie arrière (12), composée de la fourche (4) et de l'organe à géométrie variable.
